# EUROPEAN PATENT APPLICATION

(11) **EP 3 573 013 A1**
(43) Date of publication of application: **27.11.2019**
(21) Application number: 18741653.2
(22) Date of filing: 17.01.2018
(51) Int. Cl.: G06Q 50/10, G01C 21/20, G06F 17/30, G06T 17/05

(54) **METHOD AND DEVICE FOR CONSTRUCTING TRAFFIC ROUTE ON BASIS OF LONGITUDE/LATITUDE LINES AND PERFORMING MAP SEARCH**

(30) Priority: 20.01.2017 KR 20170009669
(71) Applicant: Jang, Soo Jin, Gwangju 61910 (KR)
(72) Inventor: Jang, Soo Jin, Gwangju 61910 (KR)
(74) Representative: Jacobi, Markus Alexander
(86) International application number: PCT/KR2018/000793
(87) International publication number: WO 2018/135852

(57) **Abstract**

Disclosed are a method and a device for constructing a traffic route by using longitude/latitude lines themselves as a three-dimensional cubic/planar lattice network and performing a map search. A method for constructing a traffic route on the basis of longitude/latitude lines and performing a map search can comprise: a step of allowing a map generation device to generate a three-dimensional map using a three-dimensional lattice network based on a plane coordinate system; a step of allowing the map generation device to provide map information on the basis of the three-dimensional map and search information inputted by an user device; and an icon linkage for map search.

## Description

### [Technical Field]

The present invention relates to longitude/latitude lines, and more particularly to a method of constructing a traffic route based on longitude/latitude lines and performing map search and a device therefor.

### [Background Art]

In the case of current techniques related to existing digital image maps (aerial views, road views, three-dimensional (3D) image maps, etc.), image maps of numerical lines (the sizes and positions of one or more 3D grid networks expressed as unique distance intervals and positions according to locations of longitude/latitude lines) used in various portals, Google, National Geographic Information Institute, navigators, etc. are not displayed on a monitor. Accordingly, such current techniques cannot be used for search and route setting that require precision.

Therefore, there is a need for development of technology to implement a precise video map and more precise and accurate search/route setting based on the precise video map.

### [Disclosure]

### [Technical Problem]

Therefore, the present invention has been made in view of the above problems, and it is one object of the present invention to provide a method of constructing a traffic route based on longitude/latitude lines and performing map search.

It is another object of the present invention to provide an apparatus for constructing a traffic route based on longitude/latitude lines and performing map search.

### [Technical Solution]

In accordance with an aspect of the present invention, the above and other objects can be accomplished by the provision of a method of constructing a traffic route based on longitude/latitude lines and performing map search, the method including a step of allowing a map creation device to create a three-dimensional (3D) map using a three-dimensional (3D) grid network based on a plane coordinate system; and a step of allowing the map creation device to provide map information based on search information input by a user device and the 3D map and interworking an icon for map search.

Meanwhile, the 3D grid network may include points, lines, and sides, wherein products are constituted of the points, the lines, or the sides alone or a combination thereof.

In addition, the size of a grid network on the 3D grid network capable of deriving a unique distance between lines through a change in a position of the longitude/latitude lines may be set considering precision according to considering driving road generation and map search route setting, and the products may include functions of and information on ropeways, tracks, routes, guide lines for a tracked object, sensors, and lanes.

In addition, the size of an one-unit (image) map, as a serial element, and search routes may be constituted based on the 3D grid network, a continuous configuration of a cube corresponding to a serially arranged grid network-based (image) map unit based on one side (one direction) may be provided, wherein the cube includes information on four-side photographs and four-way drone views (or aerial views) for replacing road views corresponding to the 3D grid network, wherein the four-side photographs correspond to the four-way drone views.

In addition, the cube may be included in a main cube, and the main cube may further include information constituting a grid network related to the respective cube, i.e., product information such as an address, a street number, an arbitrary serial number of a grid network, and a numerical value (distance + position).

In addition, on the contrary, the main cube may be disposed as a constituent under individual cube models as serial constituents of an image map.

In accordance with another aspect of the present invention, there is provided a map creation device for constituting a traffic route based on longitude/latitude lines and performing map search, wherein the map creation device includes a processor, wherein the processor creates a three-dimensional (3D) map using a three-dimensional (3D) grid network based on a plane coordinate system and provides map information based on search information input by a user device and the 3D map.

Meanwhile, the 3D grid network may include points, lines, and sides, wherein products are constituted of the points, the lines, or the sides alone or a combination thereof.

In addition, the size of a grid network on the 3D grid network may be set considering precision, and the products may include ropeways, tracks, routes, guide lines for a tracked object, sensors, and lanes.

In addition, the three-dimensional (3D) map may provide a cube, wherein the cube includes information on four-side photographs for replacing road views and four-way drone views corresponding to the 3D grid network, wherein the four-side photographs correspond to the four-way drone views.

In addition, the cube may be included in a main cube, wherein the main cube further includes a numerical value related to the cube and information on products.

In addition, a search route (selected in a separate grid network size unit for route search) of an image map corresponding to the cube (selected in a unit of a corresponding grid network size) may be constituted based on an interworking search manner of an icon.

### [Advantageous effects]

As apparent from the above description, a method of constructing a traffic route based on longitude/latitude lines and performing map search and a device therefor can be used as alternatives to overcome inaccuracy and inconvenience due to limited location search or inaccurate distance movement search of existing road views. That is, according to an embodiment of the present invention, an image map capable of replacing a simple plane digital map and road view and increasing search precision can be manufactured. Accordingly, the accuracy of information on navigation/traffic routes and the accuracy of generally provided map information can be improved.

### [Description of Drawings]

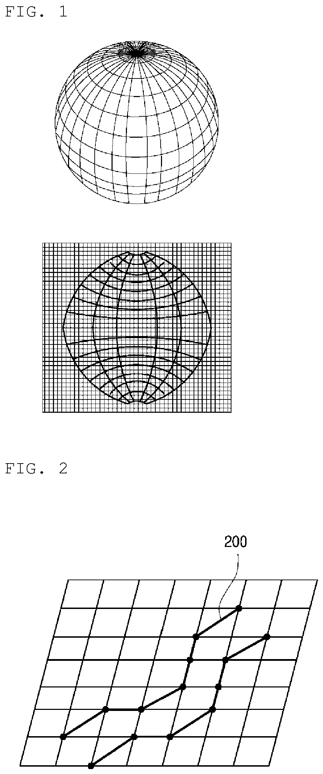

An upper image of FIG. 1 illustrates longitude/latitude lines of the earth.
A lower image of FIG. 1 illustrates a three-dimensional (3D) vertical rectangular coordinate system of the earth.
FIG. 2 is a conceptual map illustrating lines created by connecting grid intersections to each other in accordance with a specific area/purpose according to an embodiment of the present invention.
FIG. 3 is a conceptual map illustrating routes in a South Korea region according to an embodiment of the present invention.
FIG. 4 illustrates a perspective view of the top of a grid network by a 3D rectangular coordinate system according to an embodiment of the present invention.
FIG. 5 is a side perspective view expressing altitude according to an embodiment of the present invention.
FIG. 6 is a conceptual map illustrating functions and information through utilization of products through combination of intersections, lines, and sides of a grid network for creating routes of an autonomous navigation vehicle according to an embodiment of the present invention.
FIG. 7 is a conceptual map illustrating a function wherein an icon for searching the direction and location of a route interworks with a corresponding image (photograph) map according to an embodiment of the present invention.
FIG. 8 is a conceptual map illustrating a cube according to an embodiment of the present invention.

### [Best mode]

Hereinafter, specific embodiments of the present invention are described with reference to the attached drawings. These embodiments are described in sufficient detail to enable those skilled in the art to practice the invention. It should be understood that the various embodiments of the present invention may be different but need not be mutually exclusive. For example, certain features, structures, and characteristics described herein may be implemented in other embodiments without departing from the spirit and scope of the invention in connection with one embodiment. Also, it should be understood that the locations or arrangements of the individual components of each disclosed embodiment may be varied without departing from the spirit and scope of the present invention. The following detailed description is, therefore, not provided for limitation, and the scope of the present invention is to be limited only by the appended claims and equivalents thereof, if properly explained. In the drawings, like reference numerals refer to the same or similar functions throughout the several views.

Hereinafter, preferred embodiments of the present invention are described in more detail with reference to the accompanying drawings.

The present invention relates to creation of a map that is capable of being used for destination search for delivery, etc. and route setting/creation for travel (flight). More particularly, the present invention illustrates a three-dimensional (3D) plane rectangular coordinate system network based on longitude/latitude lines, thereby being capable of implementing a precise (visual) map according to purpose.

In addition, the present invention uses 3D plane rectangular coordinates based on longitude/latitude lines, thereby being capable of setting a route and a search route along longitude/latitude lines and, accordingly, overcoming problems such as inaccuracy or inconvenience due to limited location search or inaccurate distance movement search of road views (road views of Naver, Daum, etc.) provided in portal sites or the like.

An operation of generating a three-dimensional (3D) map, described below, may be performed by a map creation device according to the present invention.

An upper image of FIG. 1 illustrates longitude/latitude lines of the earth.

A lower image of FIG. 1 illustrates a three-dimensional (3D) vertical rectangular coordinate system of the earth.

Although the lower image of FIG. 1 is illustrated as a plane image, the altitude may be applied thereto by applying 3D effect.

By using the method of constructing a traffic route based on longitude/latitude lines and performing map search according to an embodiment of the present invention, an image map having high precision may be manufactured. Such an image map may replace existing simple plane numerical maps and road views.

A plane rectangular coordinate system (longitude/latitude coordinate system) may be provided in the form of a 3D numerical value (a unique position and distance of a longitude/latitude line according to each of positions) grid network and a general map and an image map (four-way photograph + four-way drone view video) which are shown on a cube.

When a 3D (cubic) grid network is shown upon (digital) map creation and search, numerical values (position + distance) based on longitude/latitude lines are used. Accordingly, standardization (versatility), precision, ease, and stability may be secured. When each grid network is selected according to purpose, the magnitude (unit) of a numerical value (position + distance) of one grid network may be set. The magnitude (unit) may be a degree/minute/second unit of a longitude/latitude line. Such a unit may be illustrated as being overlapped on a monitor upon map search. That is, an entire area of a map may be covered with a 3D (cube) grid network (each eye of the grid is constituted of each longitude/latitude line) formed by a plane rectangular coordinate system that is implemented based on longitude/latitude lines (horizontal line x vertical line).

Constituents (products) such as points, lines, and sides constituting the 3D grid network may be applied to augmented reality and virtual reality. For example, while directions were indicated by arrows in the past, constituents, which are formed by connecting lines on the 3D grid network according to use thereof and are used as direction-indicating graphics on a surface such as roads, may be provided with sensor function, etc., thereby securing stability. Four-dimensional expressions reflecting time, and six-dimensional expressions expressing directions/trajectories, etc. may be collected in accordance with subsequent need and possibility.

In addition, according to an embodiment of the present invention, lines may be created by combining longitude/latitude lines according to the use on a 3D vertical grid diagram. That is, in accordance with the use thereof, lines may be created and illustrated by combining intersections based on binding and connection, arbitrary points, and lines. Sides may be created and illustrated by combining lines in accordance with the use thereof. A 3D cube may be created and illustrated by combining points, lines, and sides in accordance with the use thereof.

Products constituted in the single or combined form of points, lines, and sides, according to purpose, on the 3D grid network may be based on a unique position and distance of each of longitude/latitude lines and may function according to each purpose thereof. In addition, search lines (shown in the form of a 3D grid network on a map in a layer mode) constituted of longitude/latitude lines (vertical line x horizontal line) reflecting numerical values (distance + position), as a kind of a product may function as position movement and tracking search lines in an aerial view, etc. In addition, the products may include ropeways, tracks, routes, guide lines for a tracked object, sensors, lanes, and the like.

In particular, additional devices may be added to products constituted of points, lines, and sides as combined components, thereby providing desired functions. That is, lines, sides, and cubes created on grid lines may be shown in the form of sensors in the autonomous navigation field, etc. in the form of aerial photographs in the internet of things (IoT) industry field, the drone field, etc., or in the form of flight paths, roads, lanes, tracks, functional elements, and guide lines for a tracked object, and may function as functional elements. In particular, 3D grid lines may be illustrated in an overlap mode in an aerial view search, thereby being capable of accurately and easily functioning as a search means. In addition, the 3D grid network lines (horizontal lines x vertical lines) may include various information (images, photographs, degree/minute/second values of longitude/latitude lines), thereby being capable of being illustrated and functioning as a search route and travel path of a destination.

Products created by combining lines based on the 3D grid network of the longitude and the latitude according to purpose may function as sensors or constituents which are subjects for destination setting, recognition and detection of parts requiring precise numerical values, etc.

That is, recognition sensors and complex algorithms for control in autonomous navigation, etc. may be utilized for simplified/regulated ropeways, tracks, guide lines for a tracked object, sensors, and the like. In addition, when augmented reality/virtual reality (information communication technology (ICT), IoT technology) is constituted in the navigation filed, etc., application to various products is possible. By combining functional sensor elements (particularly, functional sensor elements for ropeways/tracks), such as points, lines, and sides constituting the 3D grid network, with the graphics processing unit (GPU) technology, etc., products may be provided with functions necessary for autonomous navigation, etc.

FIG. 2 is a conceptual map illustrating lines created by connecting grid intersections to each other in accordance with a specific area/purpose according to an embodiment of the present invention.

Referring to FIG. 2, lines 200 and sides may be created by connecting grid intersections to each other.

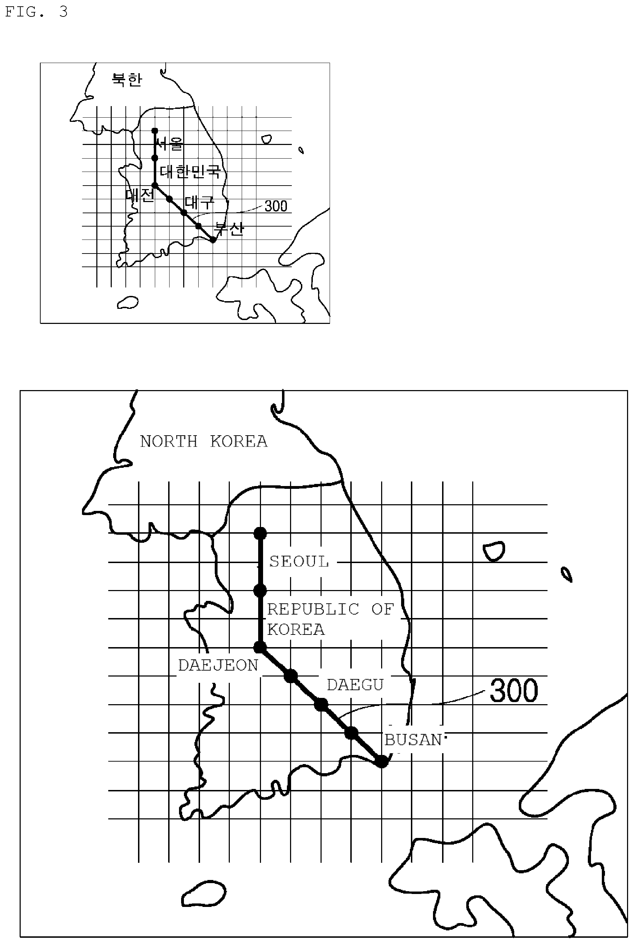

FIG. 3 is a conceptual map illustrating routes in a South Korea region according to an embodiment of the present invention.

FIG. 3 illustrates an embodiment of displaying/creating information on the Kyungbu line 300.

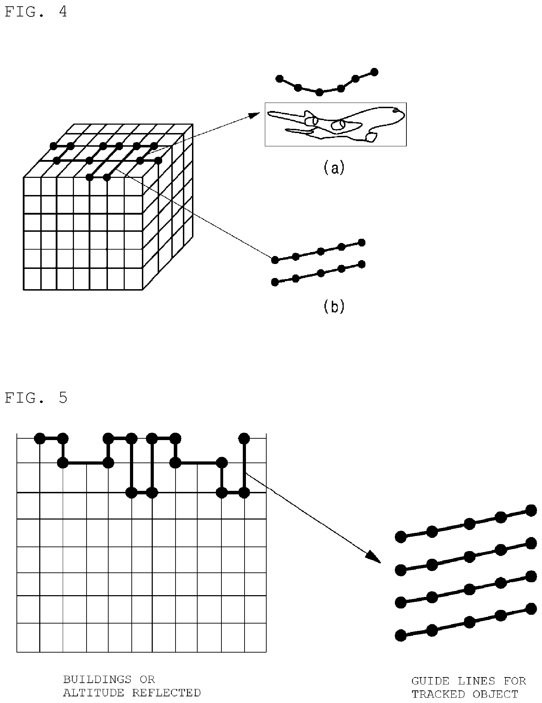

FIG. 4 illustrates a perspective view of the top of a grid network by a 3D rectangular coordinate system according to an embodiment of the present invention.

Referring to FIG. 4, for example, lines may be formed by connecting 3D grid constituents of a corresponding region. In accordance with the purpose, routes (flight paths), lanes, ropeways, tracks, sensors, and the like may be created in the form of a combination of points + lines + sides.

Lines, sides, and a cube created by connecting grid intersections may be used to create, for example, the constitution and function of flight paths (ropeways), the creation and function of tracks, guide lines for tracked objects such as an autonomous vehicle and an autonomous airplane, etc.

FIG. 4(a) illustrates flight paths (ropeways) constituted on a 3D cubic grid.

FIG. 4(b) illustrates roads or tracks for an autonomous vehicle and the like constituted on a 3D cubic grid.

FIG. 5 is a side perspective view expressing altitude according to an embodiment of the present invention.

Referring to FIG. 5, the constituents of ropeways, tracks, flight paths, and a tracked object (guide object) may be shown on a grid network. In the case of an airplane, lines (lines suspending an airplane or control movement guide lines on the ground) may be used. A side perspective view may reflect altitude.

Lines, sides, cubes, and products (routes, lanes, etc.) constituting 3D grid lines may have unique identification information in accordance with the use thereof.

During assigning and providing information on a procedure of lines, sides, three-dimensional structures, and products, information on sides, constituted by combining unique certain numbers and sizes based on longitude/latitude lines (horizontal line x vertical line) of the grid network, administrative districts, land lot-based addresses, and location name lines, may be provided.

For example, the aforementioned products constituted of lines, sides, and a cube may be provided with unique serial numbers for arbitrary distinguishment. That is, a one-line (a single line or a combination of lines) route, a two-line (a single line or a combination of lines) route, and the like may be assigned unique distinguishment numbers. In the same manner, the products may be assigned and provided with a first side, a second side, and the like, and longitude/latitude lines respectively constituting the grid network may be provided with certain unique serial numbers.

In addition, one surface of a cube, which is described below, may be provided with a search function.

In addition, according to an embodiment of the present invention, flight route creation, search route setting, city and destination search image (drone view + four-way photograph) map manufacture are possible, and numerical values may be set on a 3D grid network for special use according to the map creation.

A specific unit (numerical value) of a grid network on the 3D grid network may be selected for and applied to a limited region (e.g., Seoul) and purpose.

For example, to create and search autonomous navigation routes, numerical values (about 30 cm in a unit of 0.01 seconds) may be selected on the 3D grid network. In addition, in the case of an image (drone view + 4-way photograph) map for confirming destination, etc. and searching a route thereof, the size of one image photograph of a corresponding area grid network and the sizes of a drone view and an aerial view may be selected as a numerical value (a value of 1/6 minutes corresponding to about 200 m to 300 m of an actual distance in degrees/minutes/seconds) on the 3D grid network based on a size capable of replacing a road view.

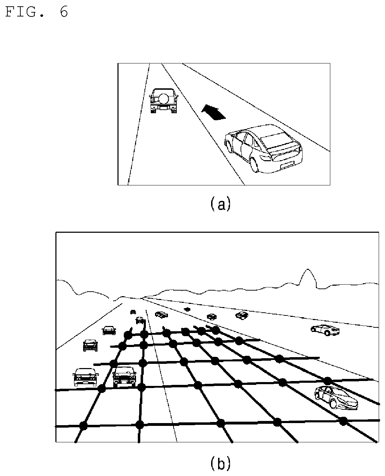

FIG. 6 is a conceptual map illustrating the size of a grid network for route creation of an autonomous navigation vehicle according to an embodiment of the present invention, and information, formed by functionalizing products of roads created by combining points, lines, sides, and cubes of the grid network, applied to the autonomous navigation vehicle. Particularly, FIG. 4(b) illustrates an overall enlarged view of a traffic route as an embodiment.

Referring to FIG. 6, the size of a grid network on a 3D grid network for route creation for autonomous navigation may be determined considering an autonomous navigation-allowing precision approximate (selection/application of a numerical value may be changed according to a precision allowance range). Among degrees/minutes/seconds, about 30 cm, which is 0.01 second unit, may be selected and applied.

Size units of a destination image (photograph and drone view) map and a longitude/latitude line grid network for searching navigation routes may be configured in binary units (a unit of one side of a 3D grid network of an image map constituting a cube). A value of 1/6 minutes corresponding to an actual distance of about 200 m to 300 m among degrees/minutes/seconds may be selected and applied.

That is, a numerical value of an image map selected according to the readability criteria considering the development of an apparatus, such as camera performance, the shooting technique, a distance from an object, etc. based on the standard may be corrected and programmed as needed. For example, a unit of the grid network including an image (map) photograph may be enlarged and adjusted from 200 m to 300 m in width x length.

For example, when an allowable error precision value between products, such as intervals between vehicles, roads, and lanes, necessary for autonomous navigation is selected from 0.01 seconds among degrees/minutes/seconds, about 30 cm may be applied.

A 4-sided photograph and 4-way drone view for replacing a corresponding road view on the grid network may be included in a cube. Information, 4-way photograph, and 4-way drone view, which correspond to each grid region, may be included.

When a 3D grid network for a specific area/specific purpose should be shown as a visible grid network (that is, a longitude/latitude line value should be selected/applied in a large scale), programming for converting, adjusting, correcting, and interworking a numerical value may be performed.

That is, a numerical value (distance) of the grid network shown due to a change in a longitude/latitude position or a change in scale ratio application may be programed to be corrected, amended, and interworked. That is, a general adjustment/correction/interworking program of converting of a measured actual distance into a numerical value may be performed on a 3D grid network.

That is, since a numerical line of a 0.01 second interval (20 cm to 30 cm) is finely shown in a scale of 1/5,000 or the like basically used in portals and the like (that is, a 3D grid network on a monitor cannot be observed with the naked eye) although it differs according to a scale type, programming for selection of, conversion into, and interworking with a numerical value (enlarged) observable with the naked eye is performed or a part to be searched is enlarged mechanically or by software, upon selection of a numerical value corresponding to the purpose depending upon a scale type, so that longitude/latitude line values and various products on the 3D grid network are shown to allow search with the naked eye.

In addition, in the case of lines constituting routes according to purpose, other map parts and scale factors may be separated/divided to select/design a binary unit (for example, on the same map, 1/5,000 is applied to parts such as buildings, and 1/1,000 is applied to parts indicated as routes) on the same map.

In addition, according to an embodiment of the present invention, the following configuration may be utilized as a tool for searching route movement and an image (photographs + drone views) map of a destination on the 3D grid network.

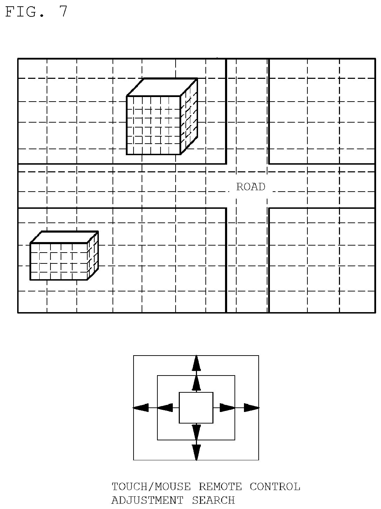

FIG. 7 is a conceptual map illustrating an icon for search according to an embodiment of the present invention.

Referring to FIG. 7, lines of the 3D grid network may be selected/searched based on an icon. For example, navigation routes may be selected and searched by remote control function-type continuous push, and a line hiding function, a return function, a 3D grid network size selection function, and the like may be performed based on a route search engine.

The icon for search may be utilized as a numerical value (distance) movement unit and a direction proposal means of the 3D grid network. The icon for search may interwork with a numerical value unit for searching an icon because numerical value units (distance + position) are included in lines on the grid network. Of course, a target area may be selected only using a search direction and speed (continuous push function) of the icon.

In addition, the icon may be adjusted based on the principles of touch, mouse click, TV remote control, and the like. When search grid line selection (or channel selection) is performed and, after selection of a moving direction, continuous push is made (e.g., a function similar to volume adjustment), movement may occur.

In particular, since three-dimensional parts may be viewed by images upon image map search, search routes may be viewed in the form of a plane longitude/latitude line grid network viewed on an image, not a 3D longitude/latitude line grid network, to confirm a target area. In addition, when corresponding numerical value lines (degrees/minutes/seconds) are searched along a direction display diagram using a grid network line hiding (return) function and a unit selection function of a 3D grid network, a movement function to a target object (area) may be performed. The same function may be performed only by information writing and search. In addition, an image map unit and search route unit on the 3D grid network may function in a dual or redundant manner.

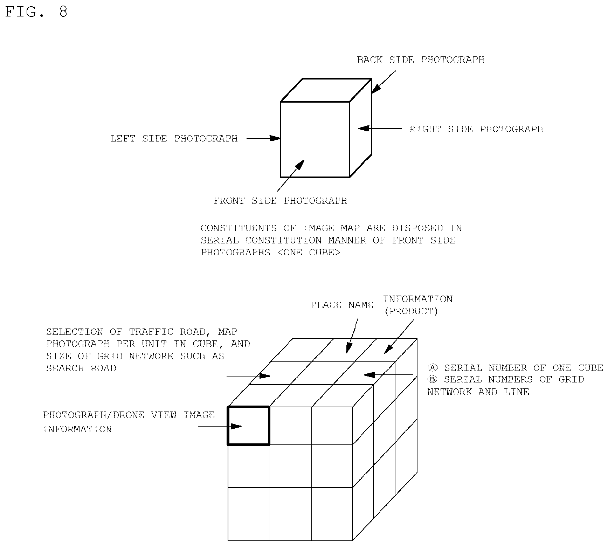

FIG. 8 is a conceptual map illustrating a cube according to an embodiment of the present invention.

Referring to FIG. 8, an image (drone views + four-way photographs) map for confirming destination, etc. and searching a route may include photographs (four way views, drone views, and navigation views) of a destination and a search destination (object) based on a cube based on a size capable of replacing image photographs of a corresponding area, drone views, and aerial views with road views inside one selected grid network. In the cube, a map for each area, individual information (corresponding longitude/latitude lines) on a 3D grid network, an information search column related to a corresponding product, etc. may be designed, included, and illustrated. In addition, a main cube may be set. Such a main cube may include the aforementioned cube as a part thereof. That is, the cube may be included in the main cube, and the main cube may further include information on a numerical value and products related to the cube. In other words, the main cube may be disposed as a component under individual cubes as serial constituents of an image map.

An upper part of FIG. 8 is a conceptual map illustrating a cube-shaped four-way photograph drone view.

A four-way drone view (video images or 360° photographs) the same as a four-way photograph of a destination may be included at the top.

A lower part of FIG. 8 is a conceptual map illustrating a main cube.

The main cube may include views of a cube type illustrated in the upper part of FIG. 8, and various information (numerical values, information, photographs/images, products, etc.).

That is, according to an embodiment of the present invention, search based on a 3D map may be performed through a step of allowing a map creation device to generate a three-dimensional (3D) map using a three-dimensional (3D) grid network based on a plane coordinate system according to longitude/latitude lines; and a step of allowing the map creation device to provide map information based on search information input by a user device and the 3D map.

The 3D grid network may include points, lines, and sides, and products may be constituted with points, lines, or sides alone or in a combined form thereof. The size of the grid network on the 3D grid network may be set considering precision, and products may include ropeways, tracks, routes, guide lines for a tracked object, sensors, and lanes.

The 3D map may provide a cube. The cube may include information on four-side photographs and four-way drone views for replacing road views corresponding to the 3D grid network. The four-side photographs and the four-way drone views may replace road views.

The method of constructing a traffic route based on longitude/latitude lines and performing map search may be implemented in the form of application or in the form of a program command that can be executed through various computer components and recorded in a computer-readable medium. The computer-readable medium can store program commands, data files, or data structures alone or combinations thereof.

The program commands recorded in the computer-readable medium may be specially designed and configured for the present invention or be known to those skilled in the field of computer software.

Examples of a computer-readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands.

Examples of the program commands include machine language code created by a compiler and high-level language code executable by a computer using an interpreter and the like. The hardware devices may be configured to operate as one or more software modules to perform processing according to the present invention, and vice versa.

While the present invention has been described referring to the preferred embodiments, those skilled in the art will appreciate that many modifications and changes can be made to the present invention without departing from the spirit and essential characteristics of the present invention.

## Claims

1. A method of constructing a traffic route based on longitude/latitude lines and performing map search, the method comprising:
a step of allowing a map creation device to create a three-dimensional (3D) map using a three-dimensional (3D) grid network based on a plane coordinate system; and
a step of allowing the map creation device to provide map information based on search information input by a user device and the 3D map.

2. The method according to claim 1, wherein the 3D grid network comprises points, lines, and sides, wherein products are constituted of the points, the lines, or the sides alone or a combination thereof, the size of a grid network on the 3D grid network is set considering precision, and the products comprise ropeways, tracks, routes, guide lines for a tracked object, sensors, and lanes.

3. The method according to claim 2, wherein the three-dimensional (3D) map provides a cube, wherein the cube comprises information on four-side photographs for replacing road views and four-way drone views corresponding to the 3D grid network, wherein the four-side photographs correspond to the four-way drone views.

4. The method according to claim 3, wherein the cube is comprised in a main cube, wherein the main cube further comprises a numerical value related to the cube and information on products.

5. The method according to claim 4, wherein the lines constituting the routes separate and classify other map parts and a scale ratio according to purpose to be expressed as a binary unit on the same map.

6. The method according to claim 5, wherein the size of a grid network on the 3D grid network for creating routes for autonomous navigation is determined based on an autonomous navigation allowance precision approximate, and a size unit of a grid network on the 3D grid network of longitude/latitude lines for a destination image map and navigation route search is constituted as the binary unit.

7. A map creation device for constituting a traffic route based on longitude/latitude lines and performing map search, wherein the map creation device comprises a processor, wherein the processor creates a three-dimensional (3D) map using a three-dimensional (3D) grid network based on a plane coordinate system and provides map information based on search information input by a user device and the 3D map.

8. The map creation device according to claim 7, wherein the 3D grid network comprises points, lines, and sides, wherein products are constituted of the points, the lines, or the sides alone or a combination thereof, the size of a grid network on the 3D grid network is set considering precision, and the products comprise ropeways, tracks, routes, guide lines for a tracked object, sensors, and lanes.

9. The map creation device according to claim 8, wherein the three-dimensional (3D) map provides a cube, wherein the cube comprises information on four-side photographs for replacing road views and four-way drone views corresponding to the 3D grid network, wherein the four-side photographs correspond to the four-way drone views.

10. The map creation device according to claim 9, wherein the cube is comprised in a main cube, wherein the main cube further comprises a numerical value related to the cube and information on products.

11. The map creation device according to claim 10, wherein the lines constituting the routes separate and classify other map parts and a scale ratio according to purpose to be expressed as a binary unit on the same map.

12. The map creation device according to claim 11, wherein the size of a grid network on the 3D grid network for creating routes for autonomous navigation is determined based on an autonomous navigation allowance precision approximate, and a size unit of a grid network on the 3D grid network of longitude/latitude lines for a destination image map and navigation route search is constituted as the binary unit.
